# EUROPÄISCHE PATENTSCHRIFT

(11) **EP 1 737 637 B1**
(45) Veröffentlichungstag und Bekanntmachung des Hinweises auf die Patenterteilung: **08.08.2012**
(21) Anmeldenummer: 05716142.4
(22) Anmeldetag: 17.03.2005
(51) Int. Cl.: B29C 45/14, B29K 75/00

(54) **Vorrichtung zum teilweisen Umspritzen metallischer Einleger mit einem Spritzgiesswerkzeug**
Device for partially extrusion-coating metallic inserts in an injection mould
Dispositif pour revetir partiellement par extrusion des elements d'insertion metalliques dans un outil de moulage par injection

(30) Priorität: 01.04.2004 DE 102004016832
(43) Veröffentlichungstag der Anmeldung: 03.01.2007
(73) Patentinhaber: Murtfeldt Kunststoffe GmbH & Co. KG, 44309 Dortmund (DE)
(72) Erfinder: FEDLER, Michael, Marius, 58507 Lüdenscheidt (DE)
(74) Vertreter: Meinke, Dabringhaus und Partner GbR
(86) Internationale Anmeldenummer: PCT/EP2005/002835
(87) Internationale Veröffentlichungsnummer: WO 2005/097456

(56) Entgegenhaltungen:
- EP-A- 0 478 476
- DE-U1-202004 005 370
- GB-A- 605 978
- GB-A- 2 201 629
- US-A- 4 405 083

## Beschreibung

Die Erfindung betrifft eine Vorrichtung zum teilweisen Umspritzen metallischer Einleger mit einem Spritzgießwerkzeug, welches aus wenigstens zwei Werkzeugbereichen gebildet wird, die mit jeweils mindestens einer Formplatte versehen sind, deren Gravuren im Verschlusszustand des Spritzgießwerkzeuges zumindest einen formbildenden Hohlraum, in dem der Einleger umspritzt wird, und wenigstens eine Freilage, die lediglich den Einleger aufnimmt, ausbilden, wobei zwischen jedem formbildenden Hohlraum und einer Freilage ein Dichtbereich vorhanden ist, der durch gegenüberliegend in den Formplatten angeordnete, flexible Dichtelemente aus Kunststoff gebildet wird.

Eine derartige Vorrichtung ist aus der US 4,405,083 bekannt.

Vorrichtungen der eingangs genannten Art sind auch aus dem nicht druckschriftlich belegbaren Stand der Technik allgemein zur Herstellung von Kunststoff-Metall-Verbundkonstruktionen, das heißt zum direkten Umspritzen von Metallteilen mit einem Spritzgießwerkzeug, bekannt. Hierdurch lassen sich Bauteile mit hoher Funktionalität bezüglich Einsatz und Montierbarkeit in einem Arbeitsgang bei gleichzeitig hoher Oberflächengüte herstellen. Eine vergleichbare Produktion derartiger Bauteile mit gängigen Füge- und Verbindungsverfahren würde aufgrund der vielen notwendigen Arbeitsgänge einen ungleich höheren Aufwand mit entsprechend höheren Kosten verursachen.

Die bekannten Vorrichtungen zum Umspritzen von Metallteilen in der Spritzgießtechnik weisen jedoch unter anderem den Nachteil auf, dass eine gratfreie Umspritzung eines Einlegers aufgrund vorhandener Toleranzen des metallischen Einlegers sowie dem Verschleiß der metallischen Dichtkanten im Spritzgießwerkzeug sich häufig kaum vermeiden lassen.

Die Aufgabe der Erfindung besteht deshalb darin, eine neue Vorrichtung zum teilweisen Umspritzen metallischer Einleger zu schaffen, mit der auch bei nicht zu vermeidenden Toleranzen des metallischen Einlegers eine weitgehend gratfreie Umspritzung möglich wird.

Die Lösung dieser Aufgabe ergibt sich aus den Merkmalen des Anspruches 1, insbesondere in den Merkmalen des Kennzeichenteils, wonach die Aufnahmebereiche für den Einleger gegenüber den Abmessungen des Einlegers Untermaß aufweisen, wobei die flexiblen Dichtelemente aus temperaturbeständigen Hochleistungspolymeren gebildet werden.

Hierdurch wird auf vorteilhafte Weise eine hohe Festigkeit und Temperaturbeständigkeit sowie ein ausreichendes Rückstellvermögen der Dichtelemente erzielt.

In der Druckschrift US 4,405,083 findet dagegen ein weniger temperaturbeständiges und gummiähnliches Dichtelement Verwendung. Als Beispiel wird Neoprenrubber angeführt, d.h. ein Polymer, welches sich aufgrund der jeweiligen Festigkeit schnell deformiert.

Im Rahmen der Lösung ist es gewährleistet, dass mit ihr eine weitgehend gratfreie Umspritzung eines Einlegers möglich ist, durch die anschließende aufwändige manuelle Nacharbeit zum Zwecke des Entfernens der Grate entfällt. Dadurch wird das Umspritzen metallischer Einleger wesentlich kostengünstiger möglich und darüber hinaus der Anwendungsbereich für dieses Verfahren deutlich erweitert.

Aus dem heterogenen Stand der Technik ist zwar eine druckschriftlich nicht belegbare Vorrichtung bekannt, bei der Kunststoffdichtungen in Schieber integriert werden. Zur Abdichtung der Freilagen hin zum formbildenden Hohlraum sind jedoch bis zu vier Kunststoffdichtungen erforderlich, die hydraulisch nach dem Prinzip der kommunizierenden Flüssigkeiten mit einer gleichmäßigen Kraft beaufschlagt werden. Jedoch ist eine derartige Vorrichtung konstruktiv sehr aufwändig sowie unter Praxisbedingungen relativ störungsanfällig.

Bei einer ersten Ausführungsform der Erfindung ragen die flexiblen Dichtelemente jeweils aus den durch die Formplattenoberflächen gebildeten Ebenen heraus. Dieses Übermaß der flexiblen Dichtelemente führt zu einem Verquetschen und einem Ausfüllen von vorhandenen Unebenheiten, Spalten od. dgl., insbesondere in den Schnittflächen des Einlegers.

Bei einer vorteilhaften Ausführungsform der Erfindung sind die flexiblen Dichtelemente austauschbar in den Formplatten angeordnet. In diesem Zusammenhang besteht die bevorzugte Ausführungsform der Erfindung darin, dass die flexiblen Dichtelemente jeweils in einem Aufnahmebereich eines Einsatzbauteiles angeordnet sind, welches in einem Hohlraum der Formplatte austauschbar befestigt ist. Diese Ausführungsform hat den wesentlichen Vorteil, dass bei Überschreiten der Standzeit eines flexiblen Dichtelementes der Austausch derselben auf einfache Weise durch Austausch des Einsatzbauteiles möglich ist und damit die Vorrichtung insgesamt sehr schnell wieder zum Umspritzen metallischer Einleger zur Verfügung steht.

In Ergänzung zur vorgenannten Ausführungsform ist es möglich, dass die Einsatzbauteile im Bereich zwischen dem formbildenden Hohlraum und den flexiblen Dichtelementen zur Abstützung letzterer jeweils einen, in den formbildenden Hohlraum ragenden Absatz aufweisen. Dadurch wird das flexible Dichtelement auf vorteilhafte Weise allseitig gegen den entstehenden Werkzeuginnendruck abgestützt, wobei am Kunststoffformteil des Einlegers im Übergang zur Freilage ein Absatz entsteht. Weitere Vorteile der Erfindung ergeben sich aus den nachfolgenden Unteransprüchen sowie aus der Beschreibung eines Ausführungsbeispieles. Es zeigen:
- Fig. 1: schematische Ansicht einer Spritzgießmaschine,
- Fig. 2: schematische Ansicht eines Spritzgießwerkzeuges gemäß Fig. 1,
- Fig. 3 und 4: Draufsicht auf die Formplatten des Spritzgießwerkzeuges gemäß Fig. 2,
- Fig. 5: Draufsicht auf ein umspritztes Fangband als Beispiel eines metallischen Einlegers,
- Fig. 6: Teilschnittdarstellung gemäß Linie VI-VI in Fig. 5,
- Fig. 7: Teilschnittdarstellung gemäß Schnittlinie VII-VII in Fig. 3,
- Fig. 8: Teil-Querschnitt durch beide Werkzeughälften im Bereich der Einsatzbauteile für je ein flexibles Dichtelement sowie den Einleger und
- Fig. 9: vergrößerte Teil-Querschnittsdarstellung gemäß Fig. 8 in geöffneter und geschlossener Stellung des Spritzgießwerkzeuges.

In den Zeichnungen ist eine Spritzgießmaschine insgesamt mit der Bezugsziffer 10 bezeichnet.

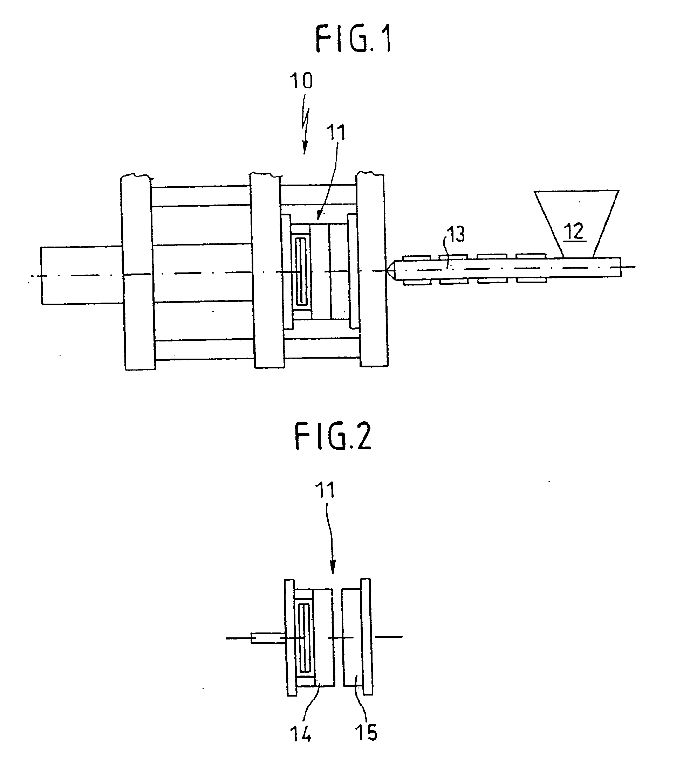

In Fig. 1 erkennt man schematisch dargestellt die Spritzgießmaschine 10 mit einem Spritzgießwerkzeug 11, wobei zusätzlich ein Aufgabetrichter 12 für das Kunststoffgranulat sowie eine Förderschnecke 13 dargestellt sind, in der das Kunststoffgranulat während des Transportes verflüssigt wird.

In Fig. 2 ist lediglich das Spritzgießwerkzeug 11 dargestellt, welches aus den Werkzeughälften 14 und 15 gebildet wird.

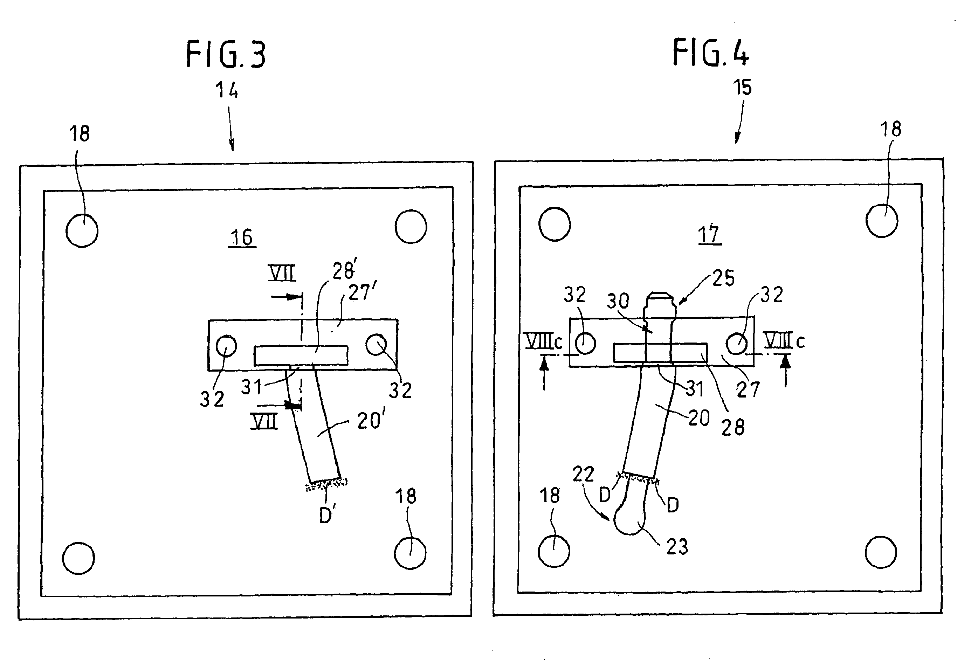

Eine Draufsicht auf Formplatten 16,17 der Werkzeughälften 14 und 15 zeigen die Fig. 3 und 4. Die Formplatten 16 und 17 weisen gegenüberliegende Führungsbolzen/Führungsbohrungen 18 auf, durch welche einerseits eine feste Zuordnung der beiden Formplatten 16 und 17 zueinander und andererseits das Öffnen und Schließen ohne Relativverschiebung möglich wird. In Fig. 4 ist die Auswerferseite dargestellt.

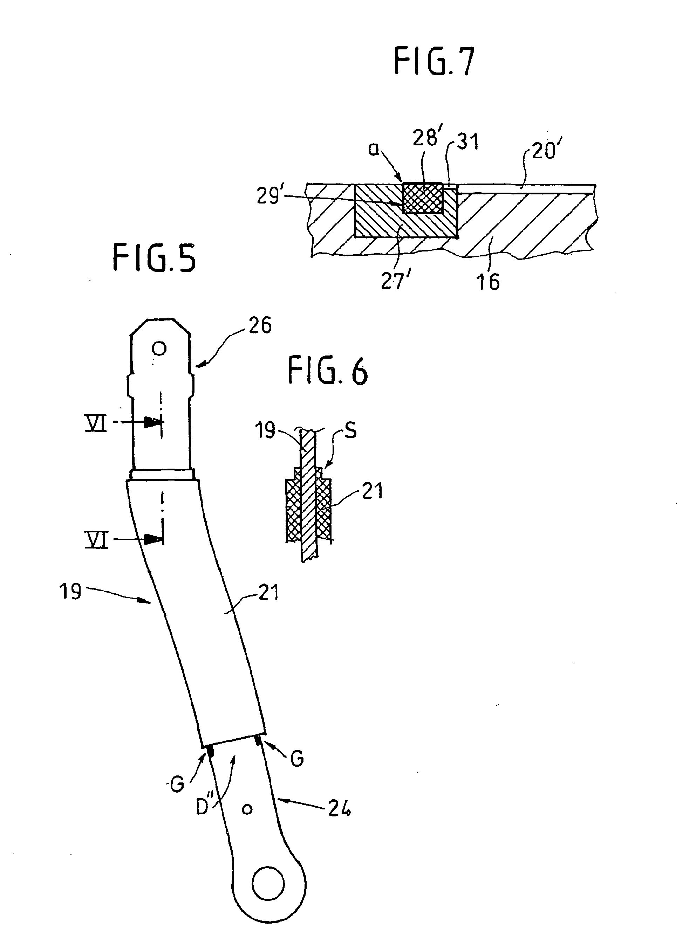

An der Formplatte 17 in Fig. 4 kann man gut erkennen, dass diese der Aufnahme eines in Fig. 5 dargestellten Fangbandes 19 dient, das durch ein Schneidverfahren hergestellt, im Automotive-Bereich eingesetzt wird. Die Länge des Fangbandes 19 beträgt ca. 155 mm, die Dicke ca. 3,55 mm und die Breite ca. 12,3 mm. In der Formplatte 17 ist mit der Bezugsziffer 20 der formbildende Hohlraum bezeichnet, in dessen Bereich während des Spritzgießprozesses das Fangband 19 mit einer Kunststoffummantelung 21 versehen wird. Unterhalb des formbildenden Hohlraumes 20 ist eine erste Freilage 22 zu erkennen, in der lediglich ein Aufnahmeraum 23 für einen Endbereich 24 des Fangbandes 19 vorhanden ist. Die Abdichtung zwischen dem formbildenden Hohlraum 20 und der ersten Freilage 22 erfolgt hier lediglich nach dem Stand der Technik über metallische Dichtflächenbereiche D, D' der gegenüberliegenden Formplatten 16,17 sowie über einen Oberflächenbereich D" des Fangbandes 19.

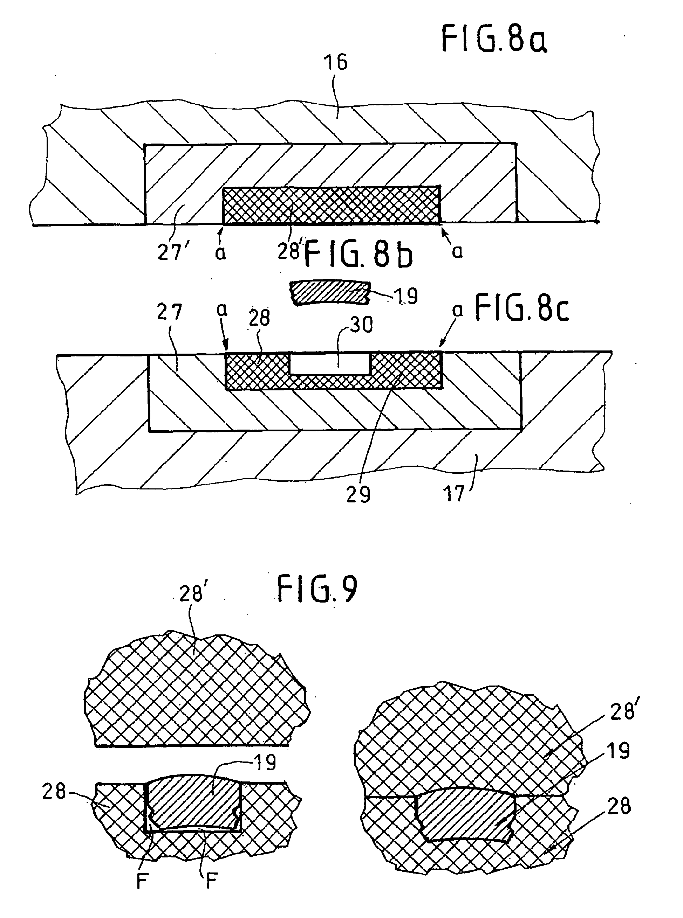

Oberhalb des formbildenden Hohlraumes 20 der Formplatte 17 ist die zweite Freilage 25 für einen Endbereich 26 des Fangbandes 19 zu erkennen. Hier weist die Formplatte 17, wie aus Fig. 4 in Verbindung mit der Schnittdarstellung gemäß Schnittlinie VIIIc-VIIIc in Fig. 8c hervorgeht, ein Einsatzbauteil 27 auf, in dem ein flexibles Dichtelement 28 in einem Hohlraum 29 angeordnet ist. Nicht nur das Einsatzbauteil 27 ist mittels Schrauben 32 austauschbar in der Formplatte 17 angeordnet, sondern auch das flexible Dichtelement 28 ist auf nicht dargestellte Weise im Einsatzbauteil 27 schraubbefestigt. Das flexible Dichtelement 28, das Einsatzbauteil 27 sowie teilweise auch die Formplatte 17 weisen einen zusammenhängenden Aufnahmebereich 30 für den Endbereich 26 des Fangbandes 19 auf, wobei der Teil des Aufnahmebereiches 30, der im flexiblen Dichtelement 28 angeordnet ist, gegenüber den Abmessungen des Fangbandes 19 ein geringfügiges Untermaß aufweist.

Die gegenüberliegende Formplatte 16 ist mit einem kongruenten formbildenden Hohlraum 20' versehen, an den sich oberhalb ebenfalls ein Einsatzbauteil 27' mit einem flexiblen Dichtelement 28' anschließt. In Fig. 7 - einer Teilschnittdarstellung gemäß Schnittlinie VII-VII in Fig. 3 - erkennt man die genaue Anordnung des formbildenden Hohlraumes 20', des Einsatzbauteiles 27' sowie des flexiblen Dichtelementes 28'. Darüber hinaus ist dargestellt, dass ein Absatz 31 zwischen dem flexiblen Dichtelement 28' und dem formbildenden Hohlraum 20' angeordnet ist, durch den eine mechanische Stützung des flexiblen Dichtelementes 28' während des Verschlusszustandes des Spritzgießwerkzeuges erfolgen soll. Aufgrund dieser Ausbildung ergibt sich letztendlich die in der Schnittdarstellung gemäß Fig. 6 zu erkennende stufige Ausgestaltung (Absatz S) des Übergangsbereiches zwischen der Kunststoffummantelung 21 und der zweiten Freilage 25. Letztlich zeigt die Schnittdarstellung gemäß Fig. 7, dass das flexible Dichtelement 28' geringfügig in a = 1/10 mm aus der Oberfläche der Formplatte 16 herausragt.

Die Abdichtung der zweiten Freilage 25 mit Hilfe der in den Einsatzbauteilen 27,27' angeordneten flexiblen Elemente 28, 28' ist insbesondere unter Hinzuziehung der Fig. 8a bis 8c sowie der Fig. 3 und 4 zu erklären. Nach dem Schließen der Werkzeughälften 14 und 15 liegen die Formplatten 16 und 17 vollflächig aneinander, wobei die geringfügig um a = 1/10 mm aus den Formplattenebenen herausragenden flexiblen Dichtelemente 28, 28' aufgrund ihres elastischen Verhaltens ihre Form verändern.

Dies ist insbesondere in Fig. 9 zu erkennen, in der die Dichtzone zwischen dem formbildenden Hohlraum 20,20' und der zweiten Freilage 25 dargestellt ist. In der linken Teildarstellung erkennt man in geöffneter Stellung der Werkzeughälften 16 und 17, dass das im Schnitt übertrieben dargestellte Fangband 19 Form- und Maßunregelmäßigkeiten aufweist und bereits in einen tendenziell Untermaß aufweisenden Aufnahmebereich 30 des flexiblen Dichtelementes 28 eingedrückt worden ist. Im Verschlusszustand ergibt sich nunmehr aufgrund der auf die Dichtelemente 28,28' einwirkenden Verschlusskräfte die Situation, dass das über die Formplattenebene hinausragende Material der flexiblen Dichtelemente 28,28' aufgrund des elastischen Verhaltens der flexiblen Dichtelemente 28,28' in vorhandene Freiräume F fließt, so dass trotz Unregelmäßigkeiten der Form des Fangbandes 19 sich eine vollständige Abdichtung zwischen den formbildenden Hohlraum 20,20' und der zweiten Freilage 25 ergibt.

Anders ist die Situation im Bereich der ersten Freilage 22. Hier erfolgt die Abdichtung nach dem Stand der Technik, das heißt es werden keine flexiblen Dichtelemente zum Einsatz gebracht. Konkret bedeutet dies, dass die in den Figuren 3 und 4 gekennzeichneten Bereiche D und D' der Formplatten 16,17 zusammen mit einem Oberflächenbereich D" des Fangbandes 19 den formbildenden Hohlraum 20,20' von der ersten Freilage 22 abdichten. Im Ergebnis ist dann beim Stand der Technik zu erkennen, dass, wie in Fig. 5 angedeutet, im Übergangsbereich zwischen der Kunststoffummantelung 21 und der ersten Freilage 22 Grate G entstehen, die aufwändig per Handarbeit entfernt werden müssen.

## Patentansprüche

1. Vorrichtung zum teilweisen Umspritzen metallischer Einleger mit einem Spritzgießwerkzeug, welches aus wenigstens zwei Werkzeugbereichen gebildet wird, die mit jeweils mindestens einer Formplatte versehen sind, deren Gravuren im Verschlusszustand des Spritzgießwerkzeuges zumindest einen formbildenden Hohlraum, in dem der Einleger umspritzt wird, und wenigstens eine Freilage, die lediglich den Einleger aufnimmt, ausbilden, wobei zwischen jedem formbildenden Hohlraum und einer Freilage ein Dichtbereich vorhanden ist, der durch gegenüberliegend in den Formplatten (16,17) angeordnete, flexible Dichtelemente (28,28') aus Kunststoff gebildet wird,
**dadurch gekennzeichnet,**
**dass** die Aufnahmebereiche der Dichtelemente (28,28') für den Einleger (19) gegenüber den Abmessungen des Einlegers (19) Untermaß aufweisen, wobei die flexiblen Dichtelemente (28, 28') aus temperaturbeständigen Hochleistungspolymeren gebildet werden.

2. Vorrichtung nach Anspruch 1,
**dadurch gekennzeichnet,**
**dass** die flexiblen Dichtelemente (28,28') jeweils aus den durch die Formplattenoberflächen gebildeten Ebenen geringfügig herausragen.

3. Vorrichtung nach Anspruch 1,
**dadurch gekennzeichnet,**
**dass** die flexiblen Dichtelemente (28,28') austauschbar angeordnet sind.

4. Vorrichtung nach Anspruch 1,
**dadurch gekennzeichnet,**
**dass** die flexiblen Dichtelemente (28,28') jeweils in einem Aufnahmebereich (29,29') eines Einsatzbauteiles (27,27') angeordnet sind, welches in einem Hohlraum der Formplatte (16,17) austauschbar befestigt ist.

5. Vorrichtung nach Anspruch 3,
**dadurch gekennzeichnet,**
**dass** die Einsatzbauteile (27,27') im Bereich zwischen dem formbildenden Hohlraum (20,20') und den flexiblen Dichtelementen (28,28') zur Abstützung letztere jeweils einen, in den formbildenden Hohlraum (20,20') ragenden Absatz (31) aufweisen.

## Claims

1. Device for the partial extrusion-coating of metallic inserts in an injection mould formed from at least two mould regions, which are fitted in each case with at least one moulding plate, of which the engravings provide in the closed position of the injection mould at least one mould-generating cavity, in which the insert is extrusion-coated, and at least one free position, which only receives the insert, wherein between each mould-generating cavity and a free position, a sealing region is formed by plastics flexible sealing elements (28, 28'), which are arranged opposite each other in the moulding plates (16, 17), **characterised in that** the regions of the sealing elements (28, 28') receiving the inserts (19) are undersized in relation to the dimensions of the insert (19), the flexible sealing elements (28, 28') being formed from temperature-resistant high-performance polymers.

2. Device according to Claim 1, **characterised in that** the flexible sealing elements (28, 28') in each case slightly protrude from the planes formed by the moulding plate surfaces.

3. Device according to Claim 1, **characterised in that** the flexible sealing elements (28, 28') are arranged interchangeably.

4. Device according to Claim 1, **characterised in that** the flexible sealing elements (28, 28') are in each case positioned in a receiving region (29, 29') of an insert component (27, 27'), which is secured interchangeably in a cavity of the moulding plate (16, 17).

5. Device according to Claim 3, **characterised in that** the insert components (27, 27'), in the region between the mould-generating cavity (20, 20') and the flexible sealing elements (28, 28'), each comprise a shoulder (31) protruding into the mould-generating cavity (20, 20') to support said sealing elements.

## Revendications

1. Dispositif pour revêtir partiellement par extrusion des éléments d'insertion métalliques dans un outil de moulage par injection, qui est formé d'au moins deux zones d'outil dotées respectivement d'au moins un support de matrice dont les gravures, à l'état de fermeture de l'outil de moulage par extrusion, forment au moins une cavité de moulage dans laquelle l'élément d'insertion est revêtu par injection et au moins une position libre qui loge uniquement l'élément d'insertion, une zone d'étanchéité étant présente entre chaque cavité de moulage et une position libre et formée par des éléments d'étanchéité flexibles (28, 28') en plastique disposés en vis-à-vis dans les plaques de moulage (16, 17),
**caractérisé en ce que** les zones de logement des éléments d'étanchéité (28, 28') pour élément d'insertion (19) présentent une dimension inférieure aux dimensions de l'élément d'insertion (19), les éléments d'étanchéité flexibles (28, 28') étant formés de polymères très performants résistant à la température.

2. Dispositif selon la revendication 1,
**caractérisé en ce que** les éléments d'étanchéité flexibles (28, 28') débordent chacun légèrement des plans formés par les surfaces des plaques de moulage.

3. Dispositif selon la revendication 1,
**caractérisé en ce que** les éléments d'étanchéité flexibles (28, 28') sont disposés pour être remplaçables.

4. Dispositif selon la revendication 1, **caractérisé en ce que** les éléments d'étanchéité flexibles (28, 28') sont disposés respectivement dans une zone de logement (29, 29') d'une pièce d'insertion (27, 27') qui est fixée pour être remplaçable dans une cavité du support de matrice (16,17).

5. Dispositif selon la revendication 3,
**caractérisé en ce que** les pièces d'insertion (27, 27') présentent respectivement un épaulement (31) débordant dans la cavité de moulage (20, 20') dans la région entre la cavité de moulage (20, 20') et les éléments d'étanchéité flexibles (28, 28') pour l'appui de ces derniers.
